# EUROPEAN PATENT APPLICATION

(11) **EP 1 175 056 A1**
(43) Date of publication of application: **23.01.2002**
(21) Application number: 01303991.2
(22) Date of filing: 01.05.2001
(51) Int. Cl.: H04L 27/26

(54) **Many-carrier signal and transmission and reception thereof**

(30) Priority: 21.07.2000 GB 0018008
(71) Applicant: BRITISH BROADCASTING CORPORATION, London WC1X 8PL (GB)
(72) Inventor: Moss, Peter Neil, c/o British Broadcasting Corp., Tandworth, Surrey KT20 6NP (GB)
(74) Representative: Abnett, Richard Charles

(57) **Abstract**

An OFDM signal having a large plurality of data-bearing carriers (80;84) spaced by a predetermined spacing includes a plurality of pilot carriers (82;86). Each pilot carrier is spaced from the nearest data-bearing carrier and the other pilot carriers by not less than a multiple of the predetermined spacing, the multiple being at least two. A receiver for the OFDM signal includes a receiver and demodulator section (12-30) for receiving and demodulating the OFDM signal to provide a plurality of data carriers and a plurality of pilot carriers; a phase detecting section (40) for detecting phase error in the pilot carriers; a phase compensating circuit (38) for phase compensating the data carriers in dependence upon pilot carrier phase; and a main Fourier transform circuit (32) connected to the output of the phase compensating circuit. The phase compensating circuit includes a second Fourier transform circuit which provides a number of points which is a sub-multiple of the number of points provided by the main Fourier transform circuit, this sub-multiple being at least two.

## Description

### BACKGROUND OF THE INVENTION

This invention relates to the transmission and reception of many-carrier signals, for example OFDM (orthogonal frequency-division multiplex) signals. The invention is particularly though not exclusively concerned with OFDM receivers which provide a degree of noise cancellation.

OFDM signals comprise a large number of carriers which transmit digital information by spreading it over the many carriers. For example, there may be 1536 carriers at 1 kHz spacing, occupying a total of 1.536 MHz. The band of carriers forming a single channel is known as an ensemble. Because of the large number of carriers, the data rate on each carrier is only 1/1536 of the total signal data rate, and thus the period allowed for each bit being transmitted, termed the symbol period, can be relatively long. Indeed the symbol period is long compared with the likely delay time caused by multipath reflection or the likely difference in timing between signals received from different transmitter stations operating on the same frequency. Consequently multipath propagation ceases to be a problem, and a single-frequency network becomes a practical possibility.

OFDM has therefore been chosen for use in digital audio broadcasting (DAB) and in digital television employing the DVB-T standard (Digital Video Broadcasting - Terrestrial). However, it is not limited to such use and may be used for other purposes, e.g. with radio cameras, such as used for outside broadcasts, which operate at microwave frequencies (2.5-12 GHz). It is also used in the proposed CABSINET system, designed for the final distribution stage in a fibre optic distribution system and which uses COFDM (coded OFDM).

The construction of transmitters and receivers for OFDM is now well-known to those skilled in the art. The many-carrier signal is obtained by the use of a Fourier transform circuit, actually an inverse fast Fourier transform (FFT) circuit, in the transmitter, and also a corresponding fast Fourier transform circuit in the receiver. In principle other time domain/frequency domain transforms could be used, such as the Hadamard transform. The symbol period is inversely related to the carrier spacing, such that the carriers are orthogonal and do not interfere, and the FFT is of such a length as at least to have as many points as there are carriers.

It is known to incorporate pilot carriers in the many-carrier signal. These are for example used in DVB-T, as described in European Standard EN 300 744, V1.1.2 (1997-08), Digital Video Broadcasting (DVB); Framing Structure, channel coding and modulation for digital terrestrial television, published by European Telecommunications Standards Institute (ETSI), Valbonne, France, August 1997. It is known from this standard to have one of the pilot carriers located at the edge of the main band of many-carrier frequencies. The CABSINET system proposes having one of the pilot carriers located outside the main band of many-carrier frequencies.

OFDM-based digital communications links are susceptible to the effects of unwanted phase modulation, or phase noise. This can become potentially serious when operation at microwave frequencies is required. If the OFDM signal is of a type which incorporates pilot carriers, then the effects of low-frequency phase noise can be compensated for at least to some extent by identifying the phase perturbation from a QAM (quadrature amplitude modulation) constellation point common to all the carriers.

However, we have appreciated that as the pilot carriers are adjacent to data-bearing carriers, there is an upper limit to the frequency of the phase noise which can be corrected in this way, corresponding to half the carrier spacing. The most serious phase errors cannot be corrected properly. Phase errors mean loss of orthogonality of the OFDM signals and thus intercarrier interference will arise.

### SUMMARY OF THE INVENTION

The invention in its various aspects is defined in the independent claims below to which reference should now be made. Advantageous features of the invention are set forth in the appendant claims.

A preferred embodiment of the invention is described in more detail below with reference to the drawings. Briefly, in this embodiment an OFDM signal having a large plurality of data-bearing carriers spaced by a predetermined spacing includes a plurality of pilot carriers. Each pilot carrier is spaced from the nearest data-bearing carrier and the other pilot carriers by not less than a multiple of the predetermined spacing, the multiple being at least two, and preferably at least four.

A receiver for the OFDM signal conveniently includes a receiver and demodulator section for receiving and demodulating the OFDM signal to provide a plurality of data carriers and a plurality of pilot carriers; a phase detecting section for detecting phase error in the pilot carriers; a phase compensating circuit for phase compensating the data carriers in dependence upon pilot carrier phase; and a main Fourier transform circuit connected to the output of the phase compensating circuit. The phase compensating circuit includes a second Fourier transform circuit which provides a number of points which is a sub-multiple of the number of points provided by the main Fourier transform circuit, this sub-multiple being at least two, and preferably at least four.

### BRIEF DESCRIPTION OF THE DRAWINGS

The invention will be described in more detail by way of example with reference to the accompanying drawings, in which:
**Figure 1** is a block circuit diagram of part of a known OFDM receiver;
**Figure 2** is a frequency spectrum diagram showing an OFDM ensemble;
**Figure 3** is a frequency spectrum diagram showing a first OFDM ensemble provided with pilot carriers in accordance with this invention;
**Figure 4** is a frequency spectrum diagram showing a second OFDM ensemble provided with pilot carriers in accordance with this invention; and
**Figure 5** is a block circuit diagram similar to Figure 1 of an OFDM receiver embodying the invention for receiving an OFDM signal of the type shown in Figure 3 or Figure 4.

### DETAILED DESCRIPTION OF THE PREFERRED EMBODIMENT

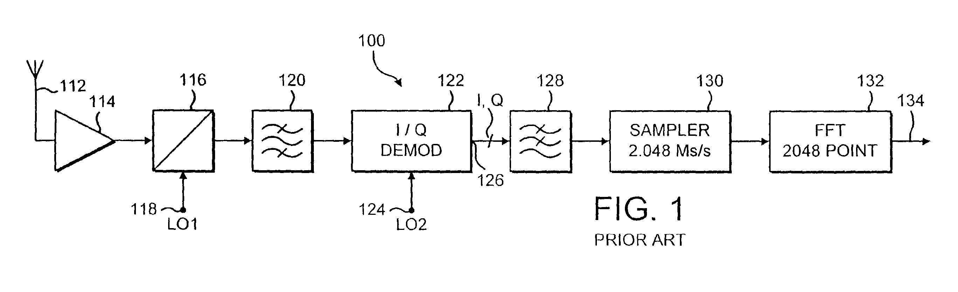

A typical known OFDM receiver is shown in schematic block diagram form in Figure 1 of the drawings and will first be described. The receiver 100 has an antenna 112 feeding a radio frequency (RF) stage shown as an RF amplifier 114. The output of the RF amplifier is applied to a mixer 116 which receives a first local oscillator signal LO1 at a terminal 118. The mixer reduces the frequency of the received signal, typically at around 225 MHz, to an intermediate frequency of typically about 36 MHz. The output of the mixer 116 is applied to an IF bandpass filter 120 which passes the desired intermediate frequency in the region of 36 MHz. The output of the IF filter 120 is then applied to an I/Q demodulator circuit 122, which receives a second local oscillator signal LO2 at a terminal 124. The I/Q demodulator circuit reduces the signals to baseband frequency and also separates the in-phase (I) and quadrature phase (Q) components of the signal. The output 126 of the I/Q demodulator thus in fact comprises two signals, as indicated on Figure 1, and the subsequent circuitry is duplicated for the two signals, as is well known.

The output 126 of the I/Q demodulator 122 is applied to an anti-alias bandpass filter 128, and from the anti-alias filter 128 is applied to a sampler or analog-to-digital converter 130. In the sampler 130 the signals are now converted from analog form to digital form, and are then applied to a fast Fourier transform (FFT) circuit 132. The FFT generates a signal in the form of a sequence or series of symbol periods. The FFT has 2048 points which corresponds to the theoretical number of carriers with a sampler operating at 2·048 Ms/s, a carrier spacing of 1 kHz, and an active symbol period of 1 ms. In fact as noted above, only 1536 carriers are used, the remainder having a theoretical amplitude of zero. At the input to the FFT 132 the bits are converted to 1536-bit parallel format.

The circuit of Figure 1 will be known to those skilled in the art, and further description thereof is not necessary.

Likewise, a corresponding transmitter will be known to those skilled in the art, and includes a 2048-point inverse FFT operating in the digital domain corresponding to the FFT 132 at the receiver. The inverse FFT receives a conventional time-based signal and converts it into a many-carrier signal for transmission.

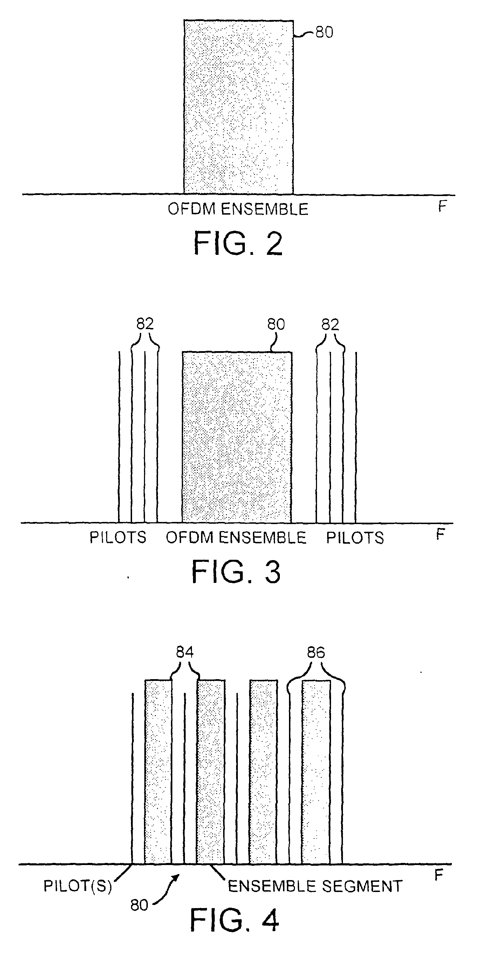

The frequency spectrum of a conventional OFDM ensemble is diagrammatically shown in Figure 2. The ensemble 80 consists of 1536 (in this case) carriers in a band of frequency occupying 1·536 MHz. The carriers are spaced by 1 kHz. Some of the carriers may be pilot carriers.

In accordance with this invention, the pilot carriers are spaced at a greater distance from the other carriers, whether data-bearing carriers or other pilot carriers. Two examples of this are illustrated, in Figure 3 and Figure 4 respectively. As shown in Figure 3, the ensemble 80 has a number of pilot carriers 82 on either side of the ensemble 80, that is above it and below it in frequency terms. The frequency spacing from the edge of the ensemble is greater than the spacing between carriers in the ensemble. The spacing between the pilots is also greater than the ensemble carrier spacing, though not necessarily by the same amount as the spacing of the nearest carrier from the edge of the ensemble.

The number of pilots and their spacings can vary. In principle there may be one or more pilot carriers on one or both sides of the existing ensemble, indicated in Figure 3. Typically there will be 8 to 32 such carriers on each side of the ensemble. The pilot carriers may be unmodulated or may be modulated with a known sequence of data. The frequency spacing of the nearest pilot from the edge of the ensemble is typically 16 to 256 times the data carrier spacing in the ensemble, whereas the spacing between pilots is typically 8 to 32 times the data carrier spacing in the ensemble. It will be noted that Figure 3 (and likewise Figure 4) is purely diagrammatic and is not to scale.

Figure 4 illustrates an alternative signal in which the ensemble 80 is broken up into several segments 84. Widely-spaced pilot carriers 86 are then placed in between the ensemble segments 84, as shown. The number of pilots and OFDM segments may vary depending upon the particular application.

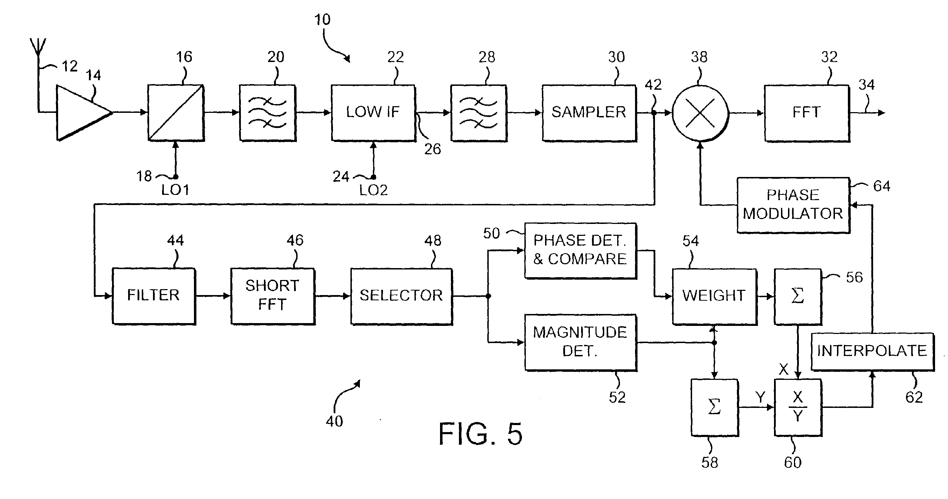

At the transmitter the modifications required to produce the signals of Figures 3 and 4 simply relate to the way the signals are distributed over the 2048 inputs to the inverse Fast Fourier Transform circuit of a known transmitter. There may be a single FFT with, for the Figure 3 arrangement, the data carrier bits being applied to the central block of inputs and the pilot carrier bits applied to selected and spaced ones of the outermost ones of the FFT inputs. Between the pilot carrier bits there will be zero value inputs. Alternatively, there may be two FFT circuits, one with 2048 theoretical inputs, for the data carriers, and one with 128 inputs for the pilot carriers. The outputs of the two FFTs are then combined. This arrangement mirrors that of the receiver of Figure 5. Other details of the transmitter will be known to those skilled in the art, for example from the European Standard EN 300 744 referred to above.

A receiver for receiving a signal of the type shown in Figures 3 and 4 is illustrated in block diagram form in Figure 5. Much of the receiver 10 is similar to the receiver 100 of Figure 1. The receiver 10 has an antenna 12 feeding a radio frequency (RF) stage shown as an RF amplifier 14. The output of the RF amplifier is applied to a mixer 16 which receives a first local oscillator signal LO1 at a terminal 18. The mixer reduces the frequency of the received signal, typically at around 225 MHz, to an intermediate frequency of typically about 36 MHz. The output of the mixer 16 is applied to an IF bandpass filter 20 which passes the desired intermediate frequency typically in the region of 36 MHz. The output of the IF filter 20 is then applied to an I/Q demodulator circuit 22, which receives a second local oscillator signal LO2 at a terminal 24. The I/Q demodulator circuit reduces the signals to baseband frequency and also separates the in-phase (I) and quadrature phase (Q) components of the signal. The output 26 of the I/Q demodulator thus in fact comprises two signals, and the subsequent circuitry is duplicated for the two signals.

The output 26 of the I/Q demodulator 22 is applied to an anti-alias bandpass filter 28, and from the anti-alias filter 28 is applied to a sampler or analog-to-digital converter 30. In the sampler 30 the signals are now converted from analog form to digital form, and are then applied to a fast Fourier transform (FFT) circuit 32. At the input to the FFT 32 the bits are converted to 1536-bit parallel format. The FFT generates a signal in the form of a sequence or series of symbol periods.

Alternatively, the I/Q demodulator 22 can be replaced by a circuit which reduces the modulation frequency to a low IF of typically 1-10 MHz. The FFT can then operate on a single, real signal, but has twice as many points, i.e. 4096 points.

Reverting to Figure 5, between the sampler 30 and the FFT circuit 32 there is an adder 38. The adder has a second input coupled to the output of a sidechain 40 which also receives an input 42 from the sampler 30. The sidechain includes a filter 44 which is designed to select the pilot carriers 82 or 86, and discard the main ensemble 80, or in the case of Figure 4, the ensemble segments 84, which contain data bearing carriers. The output of the filter 44 is then applied to a complex FFT 46, which is relatively short compared with the FFT 32. The FFT 46 is shorter than the FFT 32 by a factor which is the same as the factor by which the pilot carrier spacings are greater than the data-bearing carrier spacings. That is, the FFT 46 may typically be 1/8 to 1/32 of the length of the FFT 32.

Assuming a waveform of the Figure 3 type, the FFT 46 will provide a number of outputs corresponding to the pilot carriers and a number of unwanted outputs corresponding to the part of the frequency spectrum occupied by the ensemble itself. A selector 48 selects the outputs which correspond to the pilot carriers of which eight are diagrammatically shown in Figure 3. The output of the selector 48 is then applied two ways. First it is applied to a circuit 50 where the phase of each carrier is determined and is subtracted from the mean time average of the phase for that pilot carrier, to give the phase deviation from average for that pilot carrier. Secondly the output of selector 48 is applied to a circuit 52 which takes the complex or vector magnitude of the signal on each carrier. The magnitude signal thus obtained is then used to weight the signal from circuit 50 in a weighting circuit 54, the output of which is applied to a summation circuit 56 which provides a weighted sum of the phase deviation over all the pilots. The output of the magnitude detector 52 is itself applied to a summation circuit 58 to provide the sum of the weighting factors, which is used in a divider 60 to normalise the phase summation signal from circuit 56.

The resultant signal is applied to an interpolator 62 which increases the sampling rate of the weighted phase error from divider 60 to a value appropriate to the mean signal path. A phase modulator 64 converts the correction phase thus obtained into a multiplying phasor in the main signal path. The phase errors are then compensated in the multiplier 38, which receives the outputs from the phase modulator 64, before the main signal is applied to the main FFT 32.

In this way the frequency range over which the unwanted phase noise can be corrected is extended. As the pilot carrier carries no data, all that is detected is phase noise. The phase error of each pilot carrier is measured, and the values thus obtained averaged over all the pilots and applied to the ensemble as a whole in the form of a cancellation process.

In the presence of Gaussian noise (as well as phase noise), averaging allows the phase noise component of the pilot perturbation, which will be correlated pilot-to-pilot, to stand out from the Gaussian noise.

Similar principles apply to the signal of Figure 4. Only the details of the filtering and the pre-selector are different; these will be apparent to those skilled in the art from the foregoing description.

Other modifications may be made to the circuit illustrated in Figure 5. For example, instead of filtering out the pilots in filter 44, the data bearing carriers could be cancelled out.

Advantages of being able to use a short FFT 46 separate from the main FFT 32 are that the pilot phase is sampled much more frequently, and obtained more quickly, in time to be used to correct the data signal. Thus the Nyquist limit of the sampling process is higher, and a greater bandwidth of phase variation can be resolved. The pilot carriers are chosen to fall on the lattice of an FFT, that is the FFT 46, which is 8 to 32 times shorter than the main FFT 32 used for signal recovery.

## Claims

1. A many-carrier signal having a large plurality of data-bearing carriers spaced by a predetermined spacing and including a plurality of pilot carriers, each pilot carrier being spaced from the nearest data-bearing carrier and the other pilot carriers by not less than a multiple of the predetermined spacing, the multiple being at least two.

2. A signal according to claim 1, in which the multiple is at least four.

3. A signal according to claim 1, in which the multiple is at least eight.

4. A signal according to claim 1, in which the many-carrier signal is an OFDM signal.

5. A signal according to claim 1, in which there are a plurality of pilot carriers at frequencies above and/or below the data-bearing carriers.

6. A signal according to claim 1, in which there are a plurality of pilot carriers evenly interleaved with the data carriers.

7. A transmitter adapted to transmit a many-carrier signal in accordance with claim 1.

8. A receiver adapted to receive and reproduce a many-carrier signal in accordance with claim 1.

9. A receiver for a many-carrier signal comprising a first fast Fourier transform circuit (32) for receiving data on the data carriers of a received many-carrier signal and generating a time domain output dependent thereon, and a second fast Fourier transform circuit (46) for receiving pilot carriers of the received many-carrier signal and generating an output dependent thereon, the second fast Fourier transform circuit providing a number of points which is a sub-multiple of the number of points provided by the first fast Fourier transform circuit, the sub-multiple being at least two.

10. An OFDM receiver comprising:
a receiver and demodulator section (12-30) for receiving and demodulating a many-carrier signal to provide a plurality of data carriers and a plurality of pilot carriers;
a phase detecting section (40) for detecting phase error in the pilot carriers;
a phase compensating circuit (38) connected to the outputs of the receiver and demodulator section and the phase detecting section for phase compensating the data carriers in dependence upon the pilot carrier phase; and
a first Fourier transform circuit (32) connected to the output of the phase compensating circuit;
and in which the phase detecting section (40) includes a second Fourier transform circuit (46), the second Fourier transform circuit providing a number of points which is a sub-multiple of the number of points provided by the first Fourier transform circuit, the sub-multiple being at least two.
